Europäisches Patentamt

European Patent Office

Office européen des brevets

(11) Veröffentlichungsnummer: **0 001 050**
**A1**

(12) # EUROPÄISCHE PATENTANMELDUNG

(21) Anmeldenummer: **78100618.4**

(22) Anmeldetag: **07.08.78**

(51) Int. Cl.²: **G 01 F 23/06**

(30) Priorität: **05.09.77 DE 2739901**

(43) Veröffentlichungstag der Anmeldung:
**21.03.79 Patentblatt 79/6**

(84) Benannte Vertragsstaaten:
**FR GB SE**

(71) Anmelder: **VDO Adolf Schindling AG**
**Gräfstrasse 103**
**D-6000 Frankfurt/Main(DE)**

(72) Erfinder: **Rau, Karl**
**Blumenstrasse 20**
**D-6052 Mühlheim(DE)**

(74) Vertreter: **Könekamp, Herbert, Dipl.-Ing.**
**Sodener Strasse 9**
**D-6231 Schwalbach(DE)**

(54) **Flüssigkeitsstandsmesseinrichtung.**

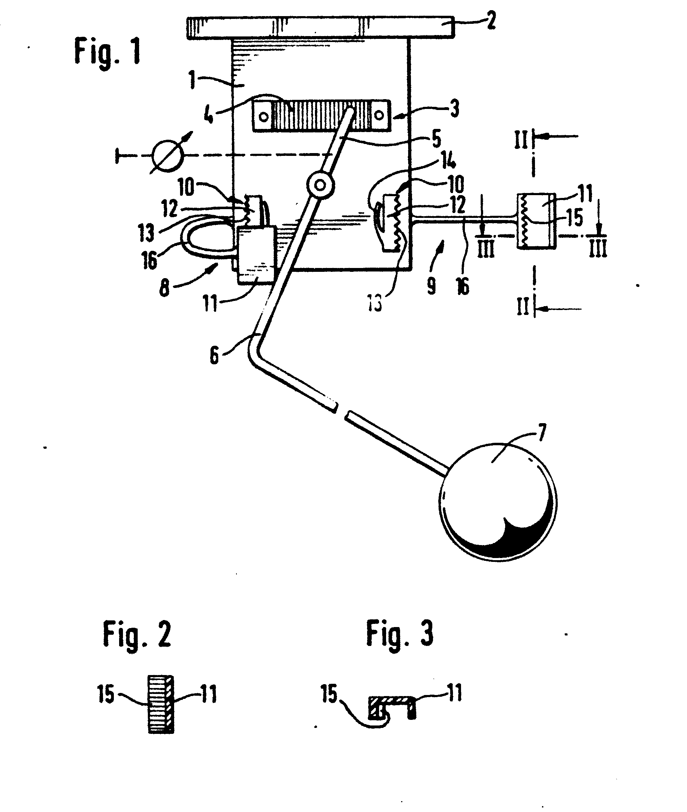

(57) Bei einer Flüssigkeitsstandsmeßeinrichtung mit einem Kunststoffträger (1) für den elektromechanischen Wandler (3) und den Schwimmerhebel (6) bestehen die einstellbaren Anschläge (8,9) für den Schwimmerhebel (6) jeweils aus einem an den Träger (1) angeformten Teil (10) und einem darauf aufsetzbaren Teil (11). Das aufsetzbare Teil (11) ist über einen flexiblen Kunststoffsteg (16) an den Träger (1) angeformt. Dadurch soll die Herstellung einer solchen Einrichtung vereinfacht werden (Figure 1).

Fig. 1

EP 0 001 050 A1

VDO Adolf Schindling AG      - 1 -      6000 Frankfurt/Main
                                        Gräfstraße 103


## Flüssigkeitsstandsmeßeinrichtung


Die Erfindung bezieht sich auf eine Flüssigkeitsstandsmeßeinrichtung mit einem Träger aus Kunststoff, auf dem ein mechanoelektrischer Wandler, insbesondere ein verstellbarer Widerstand, angeordnet und in ein diesen beeinflussender, einen
Schwimmer tragender Hebel drehbar gelagert ist, dessen
Schwenkbereich durch am Träger befindliche Anschläge begrenzt
ist, von denen mindestens einer einstellbar ausgebildet ist.

Bei bekannten Flüssigkeitsstandsmeßeinrichtungen ist als Träger ein Blechgehäuse vorgesehen, in dem der Wandler angeordnet und der Hebel mit dem Schwimmer gelagert ist. Zur Festlegung der Meßeinrichtung auf die vorgegebenen Flüssigkeitsstandsgrenzwerte sind für den Hebel Anschläge in Form von aus
dem Gehäuse ausgestanzten Lappen vorhanden, die mittels Werkzeugen in die für die gewünschte Anfangs- und Endlage des Hebels erforderliche Position gebogen werden können.

Zur Senkung der Herstellungskosten dieser Meßeinrichtung ist
man in jüngster Zeit dazu übergegangen, den Träger aus einem
thermoplastischen Kunststoff herzustellen. Da bei solchen Trägern die Anschläge nicht durch an die Träger angeformte, bieg- bare Lappen realisiert werden können, müssen zusätzliche metallische Anschläge am Träger befestigt werden, was sich störend auf den Fertigungsablauf auswirkt und einen Teil der Herstellkosteneinsparung wieder aufzehrt.

Aufgabe der Erfindung ist es, die bekannte, einen Träger aus Kunststoff enthaltende Flüssigkeitsstandsmeßeinrichtung in bezug auf die verstellbaren Anschläge und deren Montage zu verbessern.

Diese Aufgabe wird erfindungsgemäß dadurch gelöst, daß jeder einstellbare Anschlag aus zwei Elementen besteht, von denen das eine an dem Träger angeformt und das andere als auf das an dem Träger angeformte Element aufsteckbares Teil ausgebildet ist und beide mit eine Relativverschiebung verhindernden Mitteln versehen sind.

Bei einem so ausgebildeten Anschlag entfällt ein besonderer Montagearbeitsgang, da der eine Teil jedes Anschlags im gleichen Arbeitsgang wie der Träger hergestellt werden kann und der andere, aufsteckbare Teil bei der Einstellung der Anschläge anstelle eines Verbiegens, wie dies bei den metallischen Anschlägen der Fall war, aufgesteckt wird. Ein besonderer Vorteil der erfindungsgemäßen Anschläge besteht darin, daß ihre Einstellung ohne Werkzeug vorgenommen werden kann. Die Einstellung kann dadurch schneller durchgeführt werden, was sich günstig auf die Produktkosten auswirkt.

Das an den Träger angeformte Element kann gemäß einer Ausführungsform in vorteilhafter Weise als Rippe ausgebildet sein, aber auch in Form eines Kastens, auf die bzw. in den das andere Teil einsteckbar ist.

Um ein auch bei stärkeren Erschütterungen und Vibrationen sicheren Sitz des aufsteckbaren Elements auf dem anderen Element sicherzustellen, empfiehlt es sich, an eines der beiden Elemente eine federnde Zunge anzuformen, die beide Elemente nach ihrem Zusammenfügen verspannt. Durch diese Meßnahme wird darüber hinaus auch das Aufstecken des einen Elements auf das andere erleichtert, da zum Aufstecken geringere Kräfte notwendig sind.

Gemäß einer Ausführungsform der Erfindung ist zumindest eines der beiden Elemente mindestens an einer mit dem anderen Element in Berührung stehenden Seite mit einer Verzahnung und das andere Element mit mindestens einer in die Verzahnung eingreifenden Erhebung versehen. Auf diese Weise ist sichergestellt, daß nach dem Zusammenfügen der beiden Elemente diese sich nicht unbeabsichtigt relativ zueinander verschieben können. Als zweckmäßig hat es sich erwiesen, das andere Element mit mehreren, eine Verzahnung bildenden Erhebungen zu versehen, da auf diese Weise der Umfang der Verstellbarkeit gegenüber der zuerst beschriebenen Ausführungsform vergrößert werden kann.

Nach einem weiteren Gedanken der Erfindung ist das aufsteckbare Teil über einen flexiblen Steg mit dem Träger verbunden. Durch diese unverlierbare Anordnung des aufsteckbaren Teils am Träger kann der Einstellarbeitsgang weiter vereinfacht und beschleunigt werden. Bilden darüber hinaus, was besonders vorteilhaft ist, das aufsteckbare Teil, der Steg und der Träger eine einstückige Einheit, so kann auch das aufsteckbare Teil im gleichen Arbeitsgang wie der Träger hergestellt werden. Auf diese Weise lassen sich die Produktkosten für das Gehäuse und die Anschläge auf ein Minimum reduzieren.

Die Erfindung sei anhand der Zeichnung, die in zum Teil schematischer Darstellung ein Ausführungsbeispiel enthält, näher

erläutert. Es zeigen

Figur 1 eine Seitenansicht der Flüssigkeitsstandsmeßeinrichtung,

Figur 2 einen Schnitt durch den aufsteckbaren Teil eines
Anschlags der Flüssigkeitsstandsmeßeinrichtung gemäß Figur 1 entlang der Linie II-II und

Figur 3 einen Schnitt durch den aufsteckbaren Teil eines
Anschlags der Flüssigkeitsstandsmeßeinrichtung gemäß Figur 1 entlang der Linie III-III.

Die Flüssigkeitstandsmeßeinrichtung enthält einen rechteckförmigen Träger 1 aus Kunststoff, der an einem Befestigungsflansch 2 sitzt, der ebenfalls aus Kunststoff besteht und mit
dem Träger eine einstückige Einheit bilden kann. Auf dem Träger 1 befindet sich ein verstellbarer Widerstand 3, der einen
Widerstandskörper 4 und einen auf diesem entlanggleitenden
Schleifer 5 umfaßt. Der Schleifer 5 ist mit einem Hebel 6 verbunden, der im Träger 1 drehbar gelagert ist. Am freien Ende
des Hebels 6 sitzt ein Schwimmer 7.

Auf dem Träger 1 sind des weiteren zwei verstellbare Anschläge 8 und 9 angeordnet, mittels derer die Einrichtung auf die
vorgegebenen Flüssigkeitsstandswerte eingestellt werden kann.

Jeder der beiden Anschläge 8 und 9 besteht aus zwei Elementen 10 und 11, von denen das Element 10 in Form einer Rippe 12
mit auf einer Seite angeordneten Zähnen 13 ausgebildet ist.
An die Rippe 12 ist eine Federzunge 14 angeformt, die sich in
etwa parallel zu der den Zähnen 13 abgewandten Seite der Rippe 12 erstreckt. Das andere Element 11 besitzt einen in etwa
U-förmigen Querschnitt und ist an einer Schenkelinnenseite mit

einer Verzahnung 15 versehen, die an die Verzahnung 13 angepaßt ist. Der lichte Innenabstand der beiden Schenkel ist so gewählt, daß sich das Element 11 unter elastischer Verformung der Zunge 14 auf die Rippe 12 aufstecken läßt.

Das Element 11 ist über einen flexiblen Steg 16 mit dem Träger 1 verbunden. Der Steg 16, das Element 11 und der Träger 1 bilden eine einstückige Einheit aus einem thermoplastischen Kunststoff, beispielsweise Acetalharz. Die Länge des Stegs 16 ist so gewählt, daß das Element 11 ohne Schwierigkeiten auch noch auf die Endbereiche der Rippe aufgesteckt werden kann.

## Patentansprüche

1. Flüssigkeitsstandsmeßeinrichtung mit einem Träger aus Kunststoff, auf dem ein mechanoelektrischer Wandler, insbesondere ein verstellbarer Widerstand, angeordnet und in dem ein diesen beeinflussender, einen Schwimmer tragender Hebel drehbar gelagert ist, dessen Schwenkbereich durch am Träger befindliche Anschläge begrenzt ist, von denen mindestens einer einstellbar ausgebildet ist, dadurch gekennzeichnet, daß jeder einstellbare Anschlag (8,9) aus zwei Elementen (10,11) besteht, von denen das eine an den Träger (1) angeformt ist und das andere als auf das an den Träger (1) angeformte Element (10) aufsteckbares Teil (11) ausgebildet ist und beide mit eine Relativverschiebung verhindernden Mitteln (13,14,15) versehen sind.

2. Flüssigkeitsstandsmeßeinrichtung nach Anspruch 1, dadurch gekennzeichnet, daß das an den Träger (1) angeformte Element (10) als Rippe ausgebildet ist.

3. Flüssigkeitsstandsmeßeinrichtung nach Anspruch 1, dadurch gekennzeichnet, daß das an dem Träger (1) angeformte Element (10) als Kasten ausgebildet ist.

4. Flüssigkeitsstandsmeßeinrichtung nach einem der Ansprüche 1 bis 3, dadurch gekennzeichnet, daß an eines der beiden Elemente (10, und das aufsteckbare (11) angeformt ist, die beide Elemente (10,11) zum die Teil verspannt.

5. Flüssigkeitsstandsmeßeinrichtung nach einem der Ansprüche 1 bis 4, dadurch gekennzeichnet, daß zumindest eine der beiden Elemente (10,11) mindestens mit dem ande-

0001050

ren Element (11,10) in Berührung stehenden Seite mit einer Verzahnung (13) und das andere Element mit mindestens einer in die Verzahnung (13) eingreifenden Erhebung (15) versehen ist.

6. Flüssigkeitsstandsmeßeinrichtung nach Anspruch 5, _dadurch gekennzeichnet_, daß das andere Element (11) mehrere, eine Verzahnung (15) bildende Erhebungen aufweist.

7. Flüssigkeitsstandsmeßeinrichtung nach einem der Ansprüche 1 bis 6, _dadurch gekennzeichnet_, daß das aufsteckbare Teil (11) über einen flexiblen Steg (16) mit dem Träger (1) verbunden ist.

8. Flüssigkeitsstandsmeßeinrichtung nach Anspruch 7, _dadurch gekennzeichnet_, daß das aufsteckbare Teil (11), der Steg (16) und der Träger (1) eine einstückige Einheit bilden.

0001050

Fig. 1

Fig. 2

Fig. 3

**Europäisches Patentamt**

0001050

# EUROPÄISCHER RECHERCHENBERICHT

Nummer der Anmeldung

EP 78 10 0618

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | G 01 F 23/06 |
| A | <u>FR - A - 2 298 786</u> (S. INTERNATIO- NALE DE MECHANIQUE INDUSTRIELLE S.A.) <br> * Figuren 1,4 * | | |
| | | | **RECHERCHIERTE SACHGEBIETE (Int. Cl.³)** <br><br> G 01 F 23/06 |
| | | | **KATEGORIE DER GENANNTEN DOKUMENTE** <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patent- familie, übereinstimmendes Dokument |

Der vorliegende Recherchenbericht wurde für alle Patentansprüche erstellt.

| Recherchenort | Abschluß Datum der Recherche | Prüfer |
|---|---|---|
| Den Haag | 06-12-1978 | THIRO |

EPA form 1503.1  06.78